# EUROPEAN PATENT APPLICATION

(11) **EP 4 683 393 A1**
(43) Date of publication of application: **21.01.2026**
(21) Application number: 25189238.6
(22) Date of filing: 14.07.2025
(51) Int. Cl.: H04W 48/18, H04W 76/12

(54) **UPF SELECTION BASED ON SLICE-SPECIFIC INFORMATION**

(30) Priority: 15.07.2024 US 202418773340
(71) Applicant: T-Mobile USA, Inc., Bellevue, WA 98006-1350 (US)
(72) Inventor: ARUNACHALAM, Kameswaran, Bellevue, 98006 (US); AMIN, Rahul, Bellevue, 98006 (US)
(74) Representative: Suddaby, Mark Edward

(57) **Abstract**

Described herein is a node of a telecommunications network configured to select a user plane function (UPF) to support a connection of the UE based on slice-specific information received by the node and associated with the connection. The node is also configured to select the UPF based on a configuration mapping UPFs to one or more values of information elements within the slice-specific information.

## Description

### BACKGROUND

In Fifth Generation (5G) networks, user plane functions (UPFs) are selected to support sessions for user equipment (UEs) by either session management functions (SMFs) or network repository functions (NRFs) of the 5G network. The SMFs may either be configured to select the UPFs themselves or may send UPF discovery requests to NRFs to receive UPF selections from the NRFs. The SMFs may then inform the UEs of the UPFs selected for their sessions. Factors such as tracking area codes (TACs) received from the base stations that the UEs are connected to may be used, in some cases, to select the UPFs.

### BRIEF DESCRIPTION OF THE DRAWINGS

The detailed description is set forth with reference to the accompanying figures. In the figures, the left-most digit(s) of a reference number identifies the figure in which the reference number first appears. The same reference numbers in different figures indicate similar or identical items.

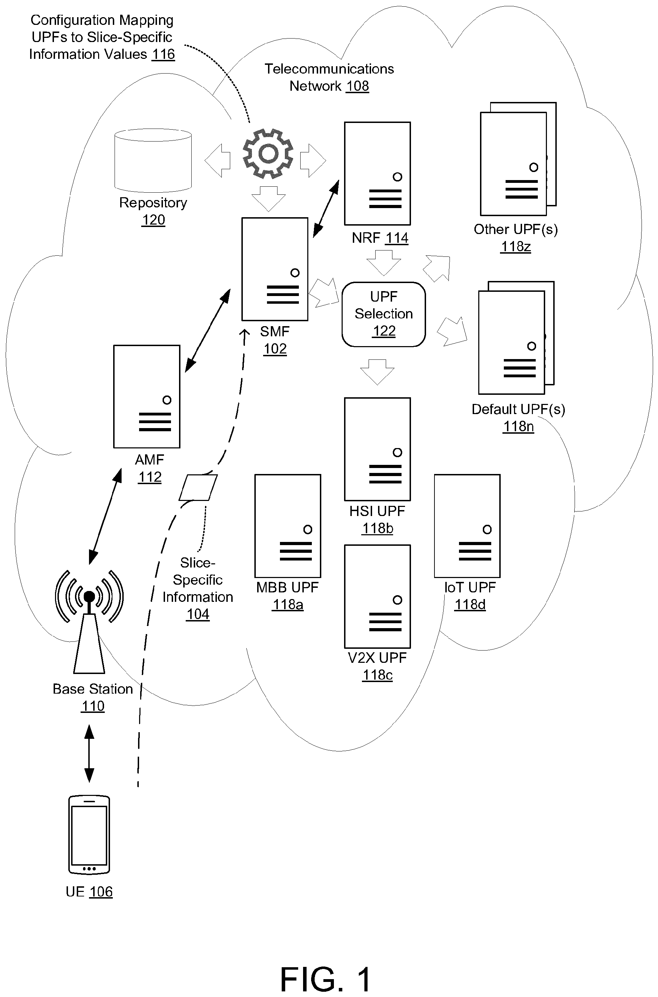

FIG. 1 shows a telecommunications network including a session management function (SMF) and a network repository function (NRF), with at least one of the SMF or NRF configured to determine a user plane function (UPF) for a connection of a user equipment (UE) based on slice-specific information associated with the connection.

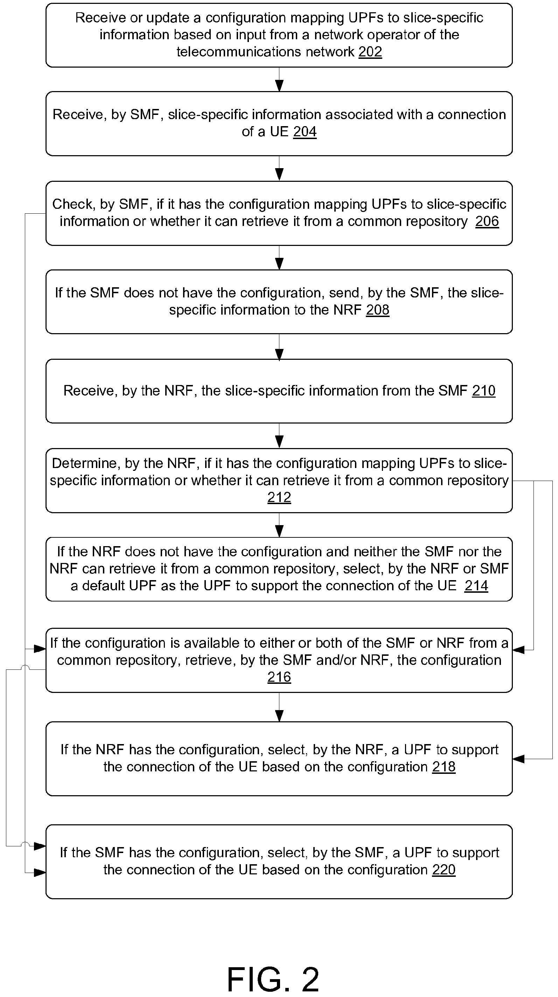

FIG. 2 is a flow diagram of an illustrative process for receiving slice-specific information associated with a connection of a UE and selecting a UPF to support that connection based on the slice-specific information and on a configuration that maps UPFs to values of information elements of the slice-specific information.

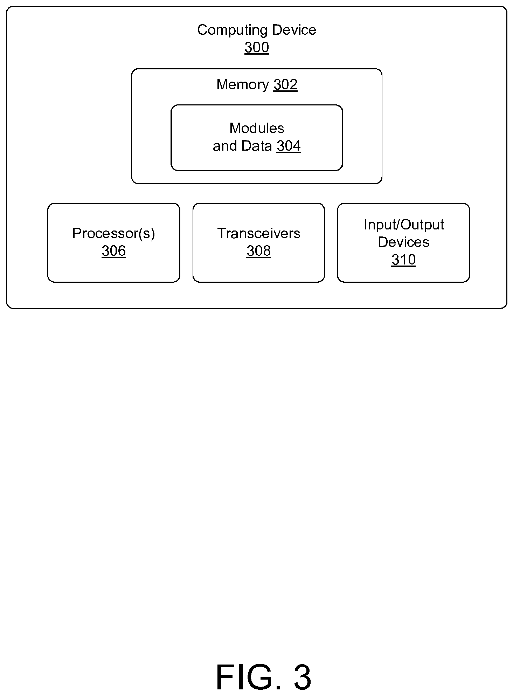

FIG. 3 is a schematic diagram of a computing device capable of implementing functionality of the SMF, NRF, or both.

### DETAILED DESCRIPTION

This disclosure is directed in part to a node of a telecommunications network configured to select a user plane function (UPF) to support a connection of a user equipment (UE) based on slice-specific information received by the node and associated with the connection. The node is also configured to select the UPF based on a configuration mapping UPFs to one or more values of information elements within the slice-specific information.

In some implementations, the node may be either a sessions management function (SMF) or a network repository function (NRF) of the telecommunications network. The slice-specific information used by the SMF or the NRF may be network slice selection assistance information (NSSAI) that includes a slice/service type (SST) and a service differentiator (SD). The node selecting the UPF may have a configuration that maps UPFs to particular SSTs or combinations of SSTs and SDs. For example, each UPF may be specific to a service and a network slice supporting that service, that combination of slice and service may be mapped to a particular UPF. Examples of services could include mobile broadband (MBB), high speed Internet (HSI), vehicle-to-everything (V2X), and Internet-of-Things (IoT). Each such service could be associated with a particular network slice and a particular UPF.

In some implementations, the UPF selection request is first received by the SMF, which checks whether it has a configuration mapping UPFs to slice-specific information. If it does not have such a configuration available, it sends a UPF discovery message to the NRF, passing along the slice-specific information. The NRF checks if it has the configuration available. If it does not, the NRF (or the SMF) may select a default UPF based on one or more of a data network name (DNN), a tracking area code (TAC), or a packet data network (PDN)-type. If the SMF has the configuration, it may select the UPF without sending a UPF discovery message to the NRF. If the NRF receives a UPF discovery message and has the configuration, it may select the UPF and notify the SMF of the selection. In some examples, the configuration may be stored in a repository and retrieved by the SMF or NRF when needed for selecting a UPF.

FIG. 1 shows a telecommunications network including a SMF and a NRF, with at least one of the SMF or NRF configured to determine a UPF for a connection of a UE based on slice-specific information associated with the connection. As illustrated, an SMF 102 may receive slice-specific information 104 associated with a UE 106. The UE 106 may be connected to the telecommunications network 108 that includes the SMF 102 through a base station 110, and the base station 110 may provide connectivity to the SMF 102 through one or more nodes of the telecommunications network 108, such as an access and mobility management function (AMF) 112. The SMF 102 may also be connected to a NRF 114, with either or both having a configuration 116 that maps slice-specific information 104 to UPFs 118. UPFs 118 may include slice-specific UPFs, such as UPFs 118a, 118b, 118c, and 118d, as well as default UPFs 118n and other UPFs 118z. Further, in some implementations, the telecommunications network 108 may include a repository 120 that may additionally or alternatively store the configuration 116. Based on the configuration 116, the SMF 102 or NRF 114 may select, at 122, one of the UPFs 118a-118d, 118n, or 118z.

In various implementations, users of UEs 106 may engage in a number of different types of activity over the telecommunications network 108 and/or may use different kinds of services offered by the telecommunications network 108. For example, a user may use mobile broadband (MBB) or high speed Internet (HSI) services. Also or instead, the UE 106 may be an Internet-of-Thing (IoT) device or vehicle, and the user of the UE 106 may use IoT services or V2X services. These are just examples of services that a user utilize which may be served using a network slice. Such a slice may dedicated resources for a service to specific node(s) of the telecommunications network 108 to ensure a certain quality of service (QoS) for those using the service and to reduce the possible impacts to users of other services.

Within the telecommunications network 108, different information about UEs 106, their base stations 110, etc. may be used in selecting nodes to serve those UEs 106 and their associated traffic, including traffic related to slice-specific services. For example, the base station 110 may indicate a tracking area code (TAC) for the cell that includes the base station 110 and the UE 106. Other data added or included may be packet data network (PDN)-type and data network name (DNN). This information can be utilized by the SMF 102 for a UE 106 to select a UPF 118 for that UE 106, or by a NRF 114. As noted herein, however, this information (TAC, DNN, PDN-type) is not slice-specific and does not allocate traffic for multiple slices among multiple corresponding UPFs 118. The UE 106 and nodes of the telecommunications network 108 may, as described further, use such information, resulting in slice-specific UPFs 118 and selection of UPFs 118 for UEs 106 based on the services and slices they are using.

In some implementations, the UE 106 may be any sort of mobile telecommunications device. For example, UE 106 may be a cellular phone, a tablet computer, a watch, goggles, an Internet-of-Things (IoT) device, a vehicle, a personal computer (PC), a gaming device, or any sort of device capable of wireless and/or cellular communication with telecommunications network. As noted herein, UE 106 may be a device of a user who subscribes for telecommunication services with a network operator of the telecommunications network 108.

The telecommunications network 108 may be any generation of technology, such as Fourth Generation (4G), Fifth Generation (5G), Sixth Generation (6G), or an earlier or later generation of technology. For the sake of illustration, the telecommunications network 108 is shown and described herein as a 5G network. The telecommunications network 108 may include radio access networks (RANs) and a core network. The RANs may include base stations, such as base station 110, offering wireless communication over radio waves and may be connected through a backhaul to the core network. The base station 110 may be, for example, a gNodeB (gNB). The core network in turn may include at least the SMF 102, AMF 112, NRF 114, UPFs 118, and (optionally) repository 120. The core network may also include an Internet Protocol (IP) multimedia subsystem (IMS) to enable packet-based communications across the core network.

In various implementations, the SMF 102, AMF 112, NRF 114, UPFs 118, and repository 120 may be implemented on one or more computing devices. A computing device may implement more than one of these core network nodes; also, one of these core network nodes could be virtualized across multiple computing devices with a part of the nodes compute on each of multiple devices. The nodes may also be connected via specific interfaces and exchange specific information. For instance, the base station 110 and AMF 112 may be connected by N1-N2 interfaces, the AMF 112 and SMF 102 may be connected by an N11 interface, and the SMF 102 and UPFs 118 may be connected by N4 interfaces. The AMF 112 may also communicate with the NRF 114, as may the SMF 102. An example computing device for implementing one or more of these nodes, such as SMF 102 and/or NRF 114, is illustrated in FIG. 3 and described below in detail with reference to that figure.

In some implementations, telecommunications networks 108 utilize NSSAI for various purposes, and such information can be passed through the AMF 112 to the SMF 102. As noted, the NSSAI, which may be an information element, can include as elements or sub-elements a service/slice type (SST) and a service descriptor (SD) for the service/slice being used by the UE 106. This slice-specific information is shown in FIG. 1 as slice-specific information 104. While the slice-specific information 104 may include an NSSAI comprising an SST/SD, it may also or instead comprise other elements or sub-elements of the NSSAI, or may include other information in addition to or instead of the NSSAI. The slice-specific information 104 may comprise any information that is indicative of the service/slice being used the by the UE 106. While this slice-specific information 104 may be used for other purposes by nodes of the telecommunications network 108, it is herein described as being used by the SMF 102 or NRF 114 to select a UPF 118 for the UE 106.

In some implementations, a configuration 116 is used by the SMF 102 or NRF 114 to select the UPF 118. The configuration may be provided and updated by an operator of the telecommunications network 108 and may include at least a mapping of specific UPFs 118 to specific values of the slice-specific information 104. For example, UPF 118a could be mapped to the SST value of "10'and the SD value of '6', while UPF 118b could be mapped to the SST value of '10' and the SD value of '8.' In some examples, the configuration may also or instead be stored on a repository 120 and be retrievable when needed by the SMF 102 or NRF 114. In some of these examples, where the configuration 116 is stored on multiple ones of the SMF 102, NRF 114, and repository 120, one of the multiple instances (e.g., the repository 120) may act as a source of truth for the others.

When a UE 106 connection is being set up, it may request the AMF 112 to identify an SMF 102. The AMF 112 identifies the SMF 102, and the SMF 102 receives information about the UE 106 and its connection. The information received can include elements such as the TAC code for the UE 106. IT can also include slice-specific information 104 (e.g., the NSSAI) for the UE 106. Based on its configuration (e.g., configuration 116), the SMF 102 may then select the UPF 118 for the UE 106 or request that the NRF 114 do so (e.g., through a UPF discovery message).

In various implementations, the SMF 102 may first determine if its configuration includes a mapping of UPFs to values of slice-specific information 104. Configuration 116 includes such information, but the SMF 102 may not have received configuration 116. If the SMF 102 lacks the configuration 116, it may check whether it can be retrieved from another source (e.g., repository 120). If it has configuration 116 or can retrieve the configuration 116, the SMF 102 may use that configuration 116 and the slice-specific information 104 to select a UPF 118 for the UE 106. If the slice-specific information 104 indicates that the UE 106 is using a slice associated with a specific UPF 118 (e.g., one of UPFs 118a-118d), the SMF 102 selects that UPF 118 for the UE 106. Otherwise, the SMF 102 may select one of the default UPFs 118n or other UPFs 118z for the UE 106 (e.g., based on TAC, DNN, or PDN-type).

If the SMF 102 does not have configuration 116 and cannot retrieve it, the SMF 102 may send a UPF discovery message to the NRF 114 and include the slice-specific information 104 with the UPF discovery message. The NRF 114 may then determine if its configuration includes a mapping of UPFs to values of slice-specific information 104. Configuration 116 includes such information, but the NRF 114 may not have received configuration 116. If the NRF 114 lacks the configuration 116, it may check whether it can be retrieved from another source (e.g., repository 120). If it has configuration 116 or can retrieve the configuration 116, the NRF 114 may use that configuration 116 and the slice-specific information 104 to select a UPF 118 for the UE 106. If the slice-specific information 104 indicates that the UE 106 is using a slice associated with a specific UPF 118 (e.g., one of UPFs 118a-118d), the NRF 114 selects that UPF 118 for the UE 106. Otherwise, or if the NRF 114 does not have configuration 116 and cannot retrieve it, the NRF 114 may select one of the default UPFs 118n or other UPFs 118z for the UE 106 (e.g., based on TAC, DNN, or PDN-type) or respond with a negative or empty UPF list to the SMF 102 to enable the SMF 102 to select a UPF 118 without reference to the slice-specific information 104.

When selecting a UPF 118 that is not specific to a service/slice, the SMF 102 or NRF 114 may select between default UPFs 118n and other UPF 118 based on other, non-slice-specific criteria (e.g., TAC, DNN, PDN-type). Once the SMF 102 has selected the UPF 118 for the UE 106 or received the selection from the NRF 114, the SMF 102 may provide the selection of UPF 118 for the UE 106 and its connection.

FIG. 2 illustrates an example process. This process is illustrated as logical flow graph, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 2 is a flow diagram of an illustrative process for receiving slice-specific information associated with a connection of a UE and selecting a UPF to support that connection based on the slice-specific information and on a configuration that maps UPFs to values of information elements of the slice-specific information. As illustrated at 202, a node of a telecommunications network may receive or update a configuration based on input from a network operator of the telecommunications network. Such input can be manual configuration by an engineer or other personnel of the network operator or can be developed through machine learning, artificial intelligence, or other mechanisms. The configuration maps UPFs to one or more values of information elements within slice-specific information. For example, the slice-specific information may be NSSAI that includes a SST and a SD, and the configuration may maps UPFs to combinations of SSTs and SDs. The node programmed with the configuration may be an SMF, NRF, common repository, or multiple ones of these.

At 204, the SMF may receive slice-specific information associated with a connection of a UE. For example, the SMF may receive the SST and SD for that UE.

At 206, the SMF may then check if it has the configuration mapping UPFs to slice-specific information or whether it can retrieve it from a common repository.

At 208, if the SMF does not have the configuration, the SMF sends the slice-specific information to the NRF. In some implementations, the SMF may send the slice-specific information as part of a UPF discovery message.

At 210, the NRF receives the UPF discovery message from the SMF which includes the slice-specific information and, at 212, determines if it has the configuration mapping UPFs to slice-specific information or whether it can retrieve it from a common repository.

At 214, if the NRF does not have the configuration and neither the SMF nor the NRF can retrieve it from a common repository, the NRF (or SMF) selects a default UPF as the UPF to support the connection of the UE. In some implementations, selecting the default UPF comprises selecting the default UPF based on one or more of a DNN, a TAC, or a PDN-type.

At 216, if the configuration is available to either or both of the SMF or NRF from a common repository, either or both may retrieve the configuration.

At 218, if the NRF has the configuration, the NRF may select a UPF to support the connection of the UE based on the configuration. In some implementations, the NRF may select the UPF based on both slice-specific information and other values.

At 220, if the SMF has the configuration, the SMF may select a UPF to support the connection of the UE based on the configuration.

FIG. 3 is a schematic diagram of a computing device capable of implementing functionality of the SMF, NRF, or both. As shown, the computing device 300 includes a memory 302 storing modules and data 304, processor(s) 306, transceivers 308, and input/output devices 310.

In various examples, the memory 302 can include system memory, which may be volatile (such as RAM), non-volatile (such as ROM, flash memory, etc.) or some combination of the two. The memory 302 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store the desired information.

The memory 302 can include one or more software or firmware elements, such as computer-readable instructions that are executable by the one or more processors 306. For example, the memory 302 can store computer-executable instructions associated with modules and data 304. The modules and data 304 can include a platform, operating system, and applications, and data utilized by the platform, operating system, and applications. Further, the modules and data 304 can implement any of the functionality for the SMF 102, NRF 114, or any other node/device described and illustrated herein.

In various examples, the processor(s) 306 can be a central processing unit (CPU), a graphics processing unit (GPU), or both CPU and GPU, or any other type of processing unit. Each of the one or more processor(s) 306 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 306 may also be responsible for executing all computer applications stored in the memory 302, which can be associated with types of volatile (RAM) and/or nonvolatile (ROM) memory.

The transceivers 308 can include modems, interfaces, antennas, Ethernet ports, cable interface components, and/or other components that perform or assist in exchanging wireless communications, wired communications, or both.

While the computing device need not include input/output devices 310, in some implementations it may include one, some, or all of these. For example, the input/output devices 310 can include a display, such as a liquid crystal display or any other type of display. For example, the display may be a touch-sensitive display screen and can thus also act as an input device or keypad, such as for providing a soft-key keyboard, navigation buttons, or any other type of input. The input/output devices 310 can include any sort of output devices known in the art, such as a display, speakers, a vibrating mechanism, and/or a tactile feedback mechanism. Output devices can also include ports for one or more peripheral devices, such as headphones, peripheral speakers, and/or a peripheral display. The input/output devices 310 can include any sort of input devices known in the art. For example, input devices can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

Although features and/or methodological acts are described above, it is to be understood that the appended claims are not necessarily limited to those features or acts. Rather, the features and acts described above are disclosed as example forms of implementing the claims.

## Claims

1. A method comprising:
receiving, by a node of a telecommunications network, slice-specific information associated with a connection of a user equipment (UE); and
selecting, by the node, a user plane function (UPF) to support the connection of the UE, wherein the selecting is based on a configuration mapping UPFs to one or more values of information elements within the slice-specific information.

2. The method of claim 1, wherein the receiving and the selecting are performed by a session management function (SMF) or a network repository (NRF).

3. The method of claim 2, wherein the receiving and the selecting are performed by the NRF, and:
the method further comprises receiving, by the NRF, a UPF discovery message from the SMF which includes the slice-specific information;
or
the selecting comprises selecting the UPF based on both slice-specific information and other values.

4. The method of claims 1 to 3, wherein the slice-specific information is network slice selection assistance information (NSSAI) that includes a slice/service type (SST) and a service differentiator (SD), and the configuration maps UPFs to combinations of SSTs and SDs.

5. The method of claims 1 to 4, further comprising receiving or updating the configuration based on input from a network operator of the telecommunications network.

6. The method of claims 1 to 5, wherein the selecting comprises retrieving the configuration from a repository.

7. The method of claims 1 to 6, further comprising:
checking, by a SMF of the telecommunications network, to see if the SMF has the configuration; and
if the SMF does not have the configuration, sending, by the SMF, the slice-specific information to a network resource function (NRF) to perform the selecting.

8. The method of claim 7, wherein neither the SMF nor the NRF has the configuration, and the method further comprises selecting, by the SMF or the NRF, a default UPF as the UPF to support the connection of the UE.

9. The method of claim 8, wherein selecting the default UPF comprises selecting the default UPF based on one or more of a data network name (DNN), a tracking area code (TAC), or a packet data network (PDN)-type.

10. A session management function (SMF) comprising:
one or more processors; and
programming instructions that, when executed by the one or more processors, cause the SMF to perform operations including:
receiving slice-specific information associated with a connection of a user equipment (UE); and
selecting a user plane function (UPF) to support the connection of the UE, wherein the selecting is based on a configuration mapping UPFs to one or more values of information elements within the slice-specific information.

11. The SMF of claim 10, wherein the slice-specific information is network slice selection assistance information (NSSAI) that includes a slice/service type (SST) and a service differentiator (SD), and the configuration maps UPFs to combinations of SSTs and SDs.

12. The SMF of claim 10 or 11, wherein the operations further comprise receiving or updating the configuration based on input from a network operator of a telecommunications network that includes the SMF.

13. The SMF of claims 10 to 12, wherein the operations further include checking to see if the SMF has the configuration, and, if the SMF does not have the configuration, sending the slice-specific information to a network resource function (NRF) to perform the selecting.

14. The SMF of claim 13, wherein neither the SMF nor the NRF has the configuration, and the operations further include selecting a default UPF as the UPF to support the connection of the UE, wherein the selecting the default UPF is based on one or more of a data network name (DNN), a tracking area code (TAC), or a packet data network (PDN)-type.

15. A computer storage medium having stored thereon programming instructions that, when executed by one or more processor of a network repository function (NRF), cause the NRF to perform the method of claims 1 to 9.
